# DEMANDE DE BREVET EUROPEEN

(11) **EP 2 107 383 A1**
(43) Date de publication de la demande: **07.10.2009**
(21) Numéro de dépôt: 09156938.4
(22) Date de dépôt: 31.03.2009
(51) Int. Cl.: G01R 31/00, H04B 17/00

(54) **Procédé de détermination de la sensibilité totale rayonnée en réception d'un appareil mobile de télécommunication par signaux radiofréquences**

(30) Priorité: 04.04.2008 FR 0852263
(71) Demandeur: Sagem Wireless, 95801 Cergy Pontoise Cedex (FR)
(72) Inventeur: Pannetrat, Stéphane, 95801, CERGY PONTOISE Cedex (FR); Dembinski, Mathieu, 95801, CERGY PONTOISE Cedex (FR)
(74) Mandataire: Maillet, Alain

(57) **Abrégé**

La présente invention concerne un procédé de détermination de la sensibilité totale rayonnée d'un appareil de télécommunication par signaux radiofréquences destiné à être utilisé dans un réseau de télécommunication. Ledit procédé comporte une étape de calcul de taux d'erreurs par bit au cours de laquelle des taux d'erreurs par bit sont calculés à partir de signaux de mesure reçus par ledit appareil, chacun desdits signaux de mesure reçus étant relatif à un jeu de valeurs de paramètres de mesure. Le procédé comporte également une étape d'obtention de la sensibilité totale rayonnée au cours de laquelle la sensibilité totale rayonnée tridimensionnelle de l'appareil est obtenue par intégration de mesures définies chacune par l'association d'un taux d'erreurs par bit avec le jeu de valeurs de paramètres de mesure relatif à l'un desdits signaux émis. La mise en oeuvre dudit procédé ne pouvant utiliser une liaison montante, ledit procédé comprend ladite étape de calcul de taux d'erreurs par bit, les taux d'erreurs par bit calculés sont mémorisés par ledit appareil de télécommunication et en ce que ladite étape d'obtention de la sensibilité totale rayonnée est précédée d'une étape de mise en correspondance entre taux de bits ainsi mémorisés et jeux de valeurs de paramètres de mesure, correspondance qui est basée sur les valeurs relatives des instants de début et de fin d'émission des signaux de mesure et sur les valeurs des instants de début, de fin et de séquencement de calcul des taux d'erreurs par bit.

## Description

La présente invention concerne un procédé de détermination de la sensibilité totale rayonnée d'un appareil mobile de télécommunication par signaux radiofréquences.

Il est connu qu'un appareil mobile de télécommunication par signaux radiofréquences qu'un constructeur s'apprête à commercialiser doive subir des mesures d'homologation qui garantissent que cet appareil respecte différentes normes en vigueur et/ou des mesures qui permettent à ce constructeur de connaître les performances radiofréquences de cet appareil.

En particulier, il est connu que la sensibilité totale rayonnée (TRS pour Total Radiated Sensitivity) d'un appareil de télécommunication par signaux radiofréquences est un paramètre important qu'il est nécessaire pour un constructeur de déterminer à partir de mesures effectuées au sein d'une chaîne de mesures prévue à cet effet. La sensibilité totale rayonnée caractérise les performances de réception d'un appareil. Cette grandeur se mesure grâce à l'utilisation d'un appareil de télécommunication radiofréquence simulant une station de base permettant la mise en oeuvre artificielle d'une liaison radiofréquence entre ledit appareil sous test et ladite station de base. La sensibilité totale rayonnée d'un appareil est définie par l'intégration volumique de l'ensemble des puissances minimales P₀ d'un signal de mesure reçu par cet appareil pour un taux d'erreurs par bit fixé BG, qui est généralement défini par un standard, au sein d'une sphère englobant ledit appareil sous test.

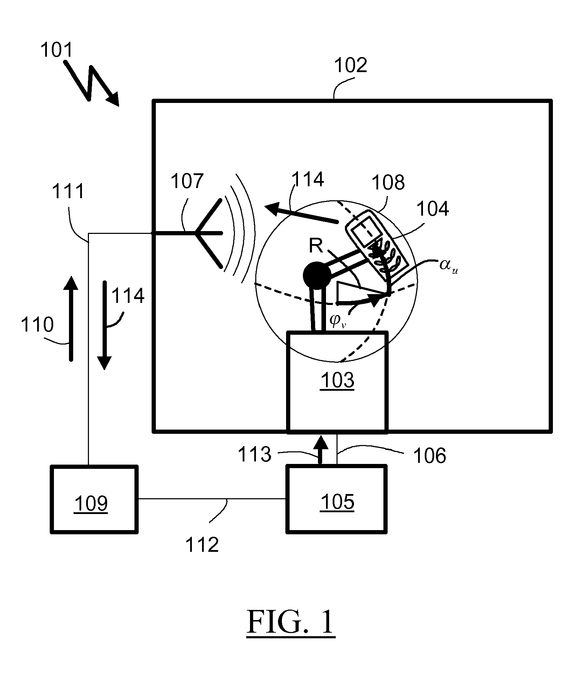

La Fig. 1 représente schématiquement une chaîne de mesure 101 destinée à mettre en oeuvre un procédé connu de détermination de la sensibilité totale rayonnée d'un appareil de télécommunication par signaux radiofréquences.

La chaîne de mesure 101 comporte tout d'abord une chambre anéchoïde calibrée 102, un positionneur 103 destiné à maintenir dans une position déterminée l'appareil 104 pour lequel la sensibilité totale rayonnée doit être déterminée. Le positionneur 103 est contrôlé par une unité de contrôle 105 située à l'extérieur de la chambre anéchoïde 102 via une liaison filaire ou optique 106. Chaque signal de commande en position 113, émis à destination du positionneur 10,3 comporte une indication, en l'occurrence les coordonnées polaires sphériques (R, α*ᵤ*,ϕ*ᵥ*) qui déterminent l'orientation dans un espace sphérique 108 de rayon prédéterminé R de l'appareil 104 par rapport à une antenne 107 polarisée soit verticalement soit horizontalement selon un paramètre PO.

Par la suite, est appelé jeu de valeurs de paramètres de mesure (α*ᵤ*, ϕ*ᵥ*, PO, Pᵢ), un ensemble de valeurs de paramètres de mesure qui est composé d'une valeur de l'angle α*ᵤ*, d'une valeur de l'angle ϕ*ᵥ*, d'une valeur de la polarisation verticale PO et d'une valeur de puissance du signal de mesure destiné à être émis. Ainsi, chaque jeu de valeurs de paramètres de mesure est relatif à un signal de mesure émis et est défini par une position de l'appareil 104 dans l'espace sphérique 108 (valeurs (α*ᵤ*, ϕ*ᵥ*)), une polarisation de l'antenne 107 (valeurs PO) et un niveau de puissance du signal de mesure émis (Pᵢ).

L'antenne 107 est située à l'intérieur de la chambre 102.

La chaîne de mesure 101 comporte également un simulateur de réseau de signaux radiofréquences 109 qui est destiné à simuler le comportement d'une station de base d'un réseau de télécommunication dans lequel l'appareil 104 est destiné à être utilisé. Ainsi, par exemple, dans le cas où l'appareil 104 est destiné à être utilisé dans un réseau de télécommunication de type GSM (Global System for Mobile), le simulateur de réseau 109 émet des signaux de mesure 110 selon un protocole conforme aux normes GSM à l'antenne 107 via une liaison filaire coaxiale 111.

Le simulateur de réseau 109 est relié par une liaison filaire coaxiale 112 à l'unité de contrôle 105 qui leur permettent de s'échanger des données telles que notamment des jeux de valeurs de paramètres de mesure ou des taux d'erreurs de bit comme on le verra plus tard.

Nous allons maintenant présenter le principe du procédé de détermination de la sensibilité totale rayonnée d'un appareil de télécommunication par signaux radiofréquences. Des procédés similaires sont décrits dans la norme « 3GPP TR 25.914 - Measurements of radio performances for UMTS terminals in speech mode » et dans « CTIA 2.2 - Mesure Plan for Mobile Station Over The Air Performance ».

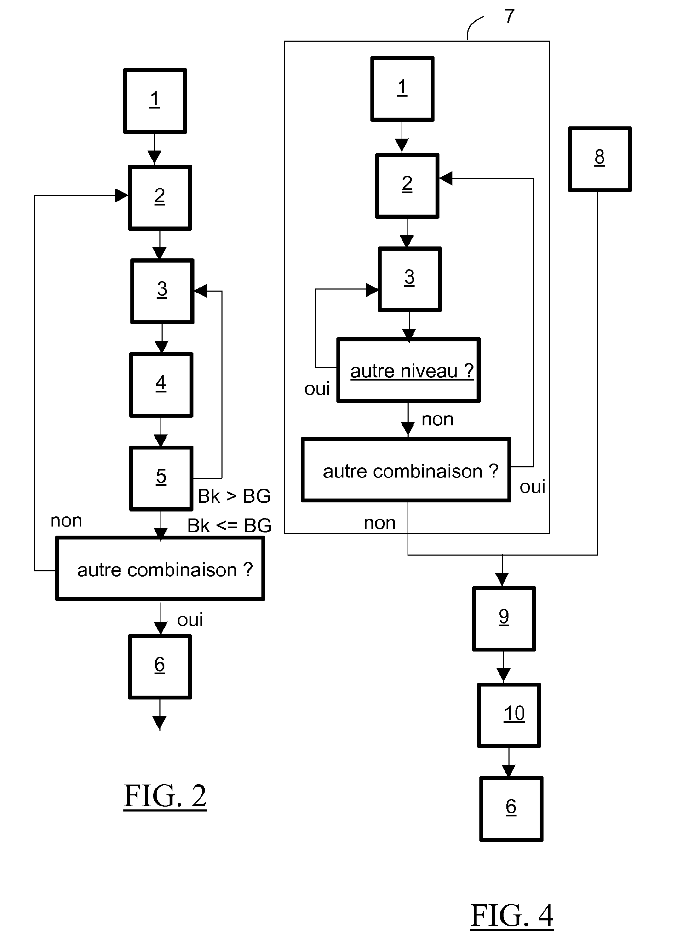

La Fig. 2 représente un diagramme représentant les étapes d'un procédé connu de détermination de la sensibilité totale rayonnée de l'appareil 104.

Ce procédé comporte une étape 1 d'initialisation au cours de laquelle est fixé un taux d'erreurs par bit BG que l'on souhaite atteindre, un nombre fini de valeurs d'angles α*ᵤ* et ϕ*ᵥ*, et de polarisation PO, ainsi que la fréquence du signal de mesure 110.

L'étape 1 est suivie d'une étape 2 de détermination des valeurs des paramètres de mesure (α*ᵤ*, ϕ*ᵥ*, PO) au cours de laquelle est déterminée une valeur pour chacun des paramètres de mesure α*ᵤ*, ϕ*ᵥ*, PO.

L'étape 2 est suivie d'une étape 3 au cours de laquelle est choisi un niveau de puissance Pᵢ du signal de mesure 110. Pour cela, l'unité de contrôle 105 fixe ce niveau de puissance d'émission Pᵢ qui peut-être choisi, par exemple, parmi un ensemble de I niveaux de puissance prédéterminés ou, selon un autre exemple, en fonction d'un taux d'erreurs par bit calculé au cours de l'exécution précédente d'une étape 4 dite de calcul d'un taux d'erreurs par bit décrite plus loin. Quelle que soit la manière dont ce choix du niveau de puissance est effectué, l'objectif est d'obtenir un niveau de puissance du signal de mesure 110 tel que l'appareil 104 reçoive ce signal avec un taux d'erreurs par bit proche de BG, c'est-à-dire égal ou juste inférieur à la valeur du taux BG.

L'étape 3 est suivie de l'étape 4 au cours de laquelle un taux d'erreurs par bit Bp est calculé à partir d'un signal de réponse 114 émis par l'appareil 104. Pour cela, le simulateur de réseau 109 émet un signal de mesure 110 de niveau de puissance Pᵢ qui est défini par un ensemble de bits. Le signal de mesure 110 est alors émis par l'antenne 107 qui se propage jusqu'à l'appareil 104 via une liaison radio dite descendante. Une fois le signal 110 reçu par l'appareil 104, l'appareil 104, fonctionnant alors selon un mode dit 'loop back', émet à puissance maximale le signal de réponse 114 par une liaison radio dite montante à destination du simulateur de réseau 109. Le signal de réponse 114, qui est une image des bits qui définissent le signal de mesure 110, est alors reçu par l'antenne 107 qui le conduit jusqu'au simulateur de réseau 109 via la liaison 111. L'unité de contrôle 105, en relation avec le simulateur de réseau 109, calcule alors le nombre de bits du signal de mesure 110 qui diffèrent du signal de réponse 114 afin de calculer le taux d'erreurs par bit Bp qui est une valeur, exprimée en pourcentage, du rapport entre ce nombre de bits sur le nombre total de bits du signal de mesure 110. Ce taux d'erreurs par bit calculé Bp, est en correspondance directe avec le jeu de valeurs de paramètres de mesure (α*ᵤ*, ϕ*ᵥ*, PO, Pᵢ) relatif au signal de mesure 110 émis du fait, d'une part, que l'unité de contrôle 105 connaît ce jeu de valeurs de paramètres de mesure via la liaison 112 et, d'autre part, que cette unité calcule et mémorise chaque taux d'erreurs par bit Bp.

L'étape 4 est alors suivie d'une étape 5 de définition d'une mesure au cours de laquelle l'unité de contrôle 105 compare le taux d'erreurs par bit calculé Bp avec le taux d'erreurs par bit BG. Deux cas peuvent se produire selon le résultat de cette comparaison.

Selon un premier cas, le taux d'erreurs par bit calculé Bp est supérieur au taux d'erreurs par bit BG. L'étape 5 est alors suivie de l'étape 3 au cours de laquelle le niveau de puissance Pᵢ du jeu de valeurs de paramètres de mesure relatif au signal de mesure 110 dernièrement émis est remplacé par un niveau de puissance Pᵢ₊₁ supérieur au niveau de puissance courant Pᵢ.

Un nouveau jeu de valeurs de paramètres de mesure (α*ᵤ*, ϕ*ᵥ*, PO, Pᵢ₊₁) est alors formé et l'étape 4 est à nouveau exécutée.

Selon un deuxième cas, le taux d'erreurs par bit calculé Bp est proche (juste inférieur ou égal) au taux d'erreurs par bit BG. Il est alors mémorisé une mesure (Bp, α*ᵤ*, ϕ*ᵥ*, PO, P₀) dans lequel Bp désigne le taux d'erreurs par bit calculé pour une position de l'appareil 104 donnée par les angles α*ᵤ* et ϕ*ᵥ* vis-à-vis de l'antenne 107 et pour une polarisation de l'antenne 107, et P₀ désigne le niveau du dernier signal de mesure 110 émis. L'étape 5 est alors suivie de l'étape 2 précédemment décrite au cours de laquelle un nouveau jeu de valeurs de paramètres de mesure est déterminé.

Lorsque toutes les combinaisons des valeurs des paramètres de mesure ont été considérées, l'étape 5 est alors suivie d'une étape 6 d'obtention de la sensibilité totale rayonnée au cours de laquelle les mesures (Bp, α*ᵤ*, ϕ*ᵥ*, PO, P₀) sont intégrées (au sens mathématique du terme) sur tout l'espace sphérique 108 par une formule connue afin d'obtenir la sensibilité totale rayonnée tridimensionnelle (3D) de l'appareil 104.

Une fois la sensibilité totale rayonnée 3D obtenue, le procédé s'arrête.

Le procédé de la Fig. 2 consiste donc à calculer des taux d'erreurs par bit qui sont directement mis en correspondance avec des jeux de valeurs de paramètres de mesure relatifs à des signaux de mesure émis. En effet, dans la mesure où la même unité, en l'occurrence l'unité de contrôle 105, connaît le jeu de valeurs de paramètres de mesure relatif à chaque signal émis et calcule les taux d'erreurs par bit, cette unité peut aisément mettre en correspondance chaque taux d'erreurs par bit calculé au cours de l'étape 4 et le jeu de valeurs de paramètres relatif au signal de mesure correspondant reçu par l'appareil 104.

On peut noter cependant que ceci n'est réalisable que lorsque l'appareil 104 peut utiliser une liaison montante pour la mise en oeuvre de ce procédé de détermination de la sensibilité totale rayonnée de cet appareil. Par contre, dans le cas où cette liaison montante de l'appareil 104 n'est pas disponible ou que l'appareil 104 n'est pas prévu pour émettre un signal selon une liaison montante tel que par exemple les appareils destinés à être utilisés uniquement dans des réseaux de diffusion tels que le réseau de type DVB-H, l'étape 4 de calcul d'un taux d'erreurs par bit telle que définie par le procédé ci-dessus ne peut plus être alors mise en oeuvre du fait que le signal de réponse 114 ne peut plus être émis par l'appareil 104.

L'un des buts de la présente invention est d'obtenir un procédé de détermination de la sensibilité totale rayonnée d'un appareil mobile de télécommunication par signaux radiofréquences qui ne peut utiliser une liaison montante.

Dans l'éventualité où l'appareil de télécommunication comporterait toutefois des moyens pour émettre un signal selon une liaison montante mais qu'il ne pourrait utiliser cette liaison montante du fait de son indisponibilité, une solution triviale serait de relier l'appareil de télécommunication 104 au simulateur de réseau 109 ou à l'unité de contrôle 105 par un câble. Cependant, une telle solution n'est pas envisageable car ce câble perturberait alors le comportement radiofréquence de l'appareil 104, ce qui biaiserait le calcul des taux d'erreurs par bit.

Afin de résoudre le problème mentionné ci-dessus, la présente invention concerne un procédé de détermination de la sensibilité totale rayonnée d'un appareil mobile de télécommunication par signaux radiofréquences destiné à être utilisé dans un réseau de télécommunication ne permettant pas l'établissement de liaison montante. Ledit procédé comporte une étape de calcul de taux d'erreurs par bit au cours de laquelle ces taux d'erreurs par bit sont calculés à partir de signaux de mesure reçus par ledit appareil, chacun desdits signaux de mesure reçus étant relatifs à un jeu de valeurs de paramètres de mesure. Le procédé comporte également une étape d'obtention de la sensibilité totale rayonnée au cours de laquelle la sensibilité totale rayonnée tridimensionnelle de l'appareil est obtenue par l'intégration volumique des mesures définies chacune par l'association d'un taux d'erreurs par bit avec le jeu de valeurs de paramètres de mesure relatif à l'un desdits signaux émis. La mise en oeuvre dudit procédé ne pouvant utiliser une liaison montante, ledit procédé est **caractérisé en ce qu**'au cours de ladite étape de calcul de taux d'erreurs par bit, les taux d'erreurs par bit calculés sont mémorisés par ledit appareil de télécommunication et en ce que ladite étape d'obtention de la sensibilité totale rayonnée est précédée d'une étape de mise en correspondance entre taux de bits ainsi mémorisés et jeux de valeurs de paramètres de mesure, correspondance qui est basée sur les valeurs relatives des instants de début et de fin d'émission des signaux de mesure et sur les valeurs des instants de début, de fin et de séquencement de calcul des taux d'erreurs par bit.

La mémorisation de chaque taux d'erreurs par bit par l'appareil de télécommunication en cours d'évaluation évite l'utilisation d'une liaison montante et étend donc le procédé connu de détermination de la sensibilité totale rayonnée au cas des réseaux de télécommunication qui ne permettent pas l'établissement de liaison montante tels que ceux du type DVB-H ou GPS, c'est-à-dire au cas des réseaux qui ne permettent pas à un appareil de télécommunication d'émettre des signaux à destination de la station de base de ce réseau à laquelle il sera systématiquement rattaché. Cette mémorisation permet également aux appareils prévus pour émettre un signal selon une liaison montante de pouvoir exécuter le procédé de détermination de la sensibilité totale rayonnée en parallèle avec un autre procédé qui permet, par exemple, d'effectuer d'autres types de mesure sur cet appareil et qui utilise, pour cela, la liaison montante de l'appareil.

La mémorisation des taux d'erreurs par bit calculés est donc faite par l'appareil de télécommunication mais l'unité qui met en oeuvre l'étape d'obtention de la sensibilité totale rayonnée, en l'occurrence l'unité de contrôle 105, n'a aucun moyen pour déterminer à quel signal de mesure émis correspond un taux d'erreurs par bit calculé et mémorisé par l'appareil de télécommunication d'où l'introduction de l'étape de mise en correspondance de taux de bits mémorisés et de jeux de valeurs de paramètres de mesure.

Cette étape de mise en correspondance est basée sur les valeurs relatives des instants de début et de fin d'émission des signaux de mesure et des instants de début, de fin et de séquencement de calcul des taux d'erreurs par bit.

Selon un mode de réalisation de ladite étape de mise en correspondance, chaque taux d'erreurs par bit ainsi mémorisé est associé au jeu de valeurs de paramètres de mesure relatif à l'un desdits signaux de mesure émis.

Selon un autre mode de réalisation de ladite étape de mise en correspondance, chaque jeu de valeurs de paramètres de mesure relatif à l'un desdits signaux de mesure émis est associé à un taux d'erreurs par bit.

Selon un de ses aspects matériels, la présente invention concerne un appareil de télécommunication par signaux radiofréquences **caractérisé en ce qu**'il comporte des moyens pour calculer un taux d'erreurs par bit selon le procédé de détermination de sa sensibilité totale rayonnée conforme à l'un des procédés ci-dessus, des moyens pour mémoriser lesdits taux d'erreurs par bit ainsi calculés et des moyens pour transférer entre autre lesdits taux d'erreurs par bit vers un autre dispositif.

Selon un autre de ses aspects matériels, la présente invention concerne un dispositif d'une chaîne de mesure destinée à mettre en oeuvre un procédé de détermination de la sensibilité totale rayonnée d'un appareil de télécommunication par signaux radiofréquences conforme à l'un des procédés ci-dessus, ledit dispositif comporte des moyens pour obtenir des taux d'erreurs par bit à partir dudit appareil suite à la mémorisation par ledit appareil de taux d'erreurs par bit calculés suite à des signaux de mesure reçus, et des moyens pour mettre en correspondance chaque taux d'erreurs par bit ainsi obtenu avec un jeu de paramètres de mesure relatif à l'un des signaux de mesure reçus par ledit appareil.

Selon un autre de ses aspects, la présente invention concerne un programme d'ordinateur stocké sur un support d'informations qui est **caractérisé en ce qu**'il comporte, lorsqu'il est chargé et exécuté par un dispositif d'une chaîne de mesure destinée à déterminer la sensibilité totale rayonnée d'un appareil de télécommunication par émission de signaux de mesure, des instructions permettant de mettre en oeuvre une étape d'obtention de taux d'erreurs par bit calculés à partir de signaux de mesure reçus et mémorisés par ledit appareil de télécommunication, et une étape de mise en correspondance entre lesdits taux d'erreurs par bit ainsi obtenus et les jeux de valeurs de paramètres de mesure relatif auxdits signaux de mesure émis.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints dans lesquels :
la Fig. 1 qui représente schématiquement une chaîne de mesure destinée à mettre en oeuvre un procédé de détermination de la sensibilité totale rayonnée d'un appareil de télécommunication par signaux radiofréquences selon l'état de la technique,
La Fig. 2 qui représente un diagramme représentant les étapes d'un procédé de détermination de la sensibilité totale rayonnée d'un appareil de télécommunication selon l'état de la technique,
la Fig. 3 qui représente schématiquement une chaîne de mesure destinée à mettre en oeuvre un procédé de détermination de la sensibilité totale rayonnée d'un appareil de télécommunication par signaux radiofréquences selon la présente invention,
la Fig. 4 qui représente un diagramme représentant les étapes d'un procédé de détermination de la sensibilité totale rayonnée d'un appareil de télécommunication selon la présente invention,
la Fig. 5 qui représente un schéma illustrant les différentes étapes du procédé de détermination de la sensibilité totale rayonnée selon la présente invention,
la Fig. 6 qui représente un schéma synoptique d'un appareil de télécommunication par signaux radiofréquences selon la présente invention, et
la Fig. 7 qui représente un schéma synoptique d'un dispositif mettant en oeuvre le procédé selon la présente invention.

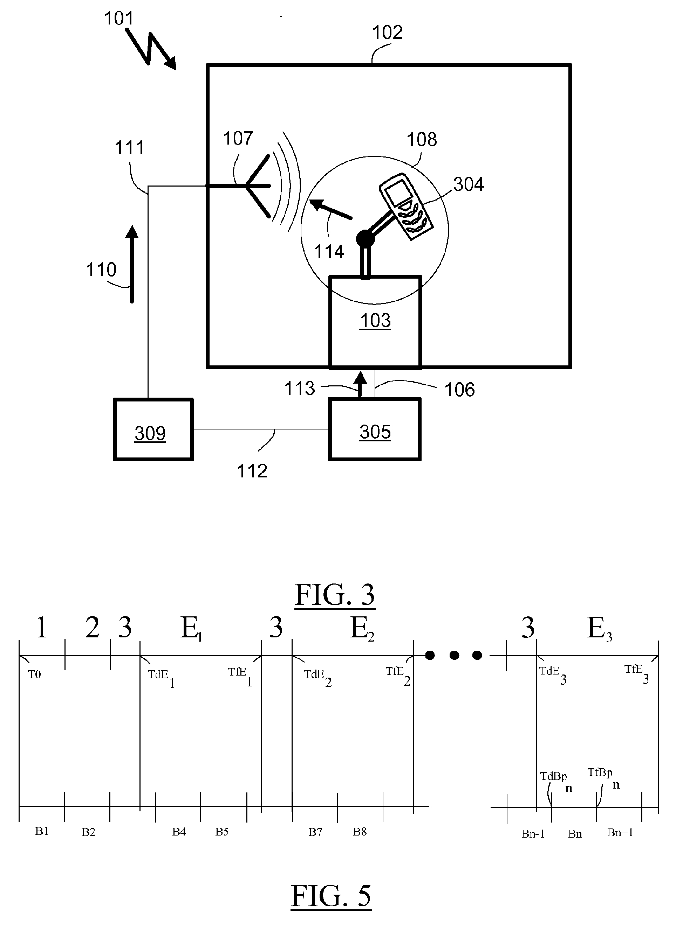

La Fig. 3 représente schématiquement une chaîne de mesure destinée à mettre en oeuvre un procédé de détermination de la sensibilité totale rayonnée d'un appareil de télécommunication par signaux radiofréquences selon la présente invention. Les éléments de la Fig. 3, qui sont identiques aux éléments de la Fig. 1, portent les mêmes références.

La chaîne de mesure 101 comporte une unité de contrôle 305 et un appareil 304 qui se différencient respectivement de l'unité de contrôle 105 et de l'appareil 104 de la Fig. 1 du fait qu'ils comportent chacun des moyens destinés à mettre en oeuvre le procédé de détermination de la sensibilité totale rayonnée d'un appareil de télécommunication par signaux radiofréquences selon la présente invention.

La chaîne de mesure 101 comporte également un simulateur de réseau 309 destiné à simuler le comportement d'une station de base d'un réseau de télécommunication qui ne permet pas l'établissement de liaison montante du type, par exemple DVB-H, dans lequel l'appareil 304 est destiné à être utilisé. Le simulateur de réseau 309 est relié par une liaison filaire 112 à l'unité de contrôle 305.

La Fig. 4 représente le diagramme des étapes d'un procédé de détermination de la sensibilité totale rayonnée d'un appareil de télécommunication par signaux radiofréquences selon la présente invention. Ce procédé comporte une étape 7 dite d'émission de signaux de mesure destinée à être mise en oeuvre par le simulateur de réseau 309 et une étape 8 dite de prise de mesures destinée à être mise en oeuvre par l'appareil 304. Les étapes 7 et 8 sont exécutées en parallèle et débutent au même instant T0 défini, de préférence, par l'expiration d'un minuteur (timer en anglais) lancé simultanément sur le simulateur de réseau 309 et l'appareil 304 et expirant au même instant.

L'étape 7 comporte entre autres l'étape 1 d'initialisation, l'étape 2 de détermination des valeurs de paramètres de mesure et l'étape 3 de choix d'un niveau de puissance du signal de mesure émis.

Suite à l'exécution de l'étape 1, est déterminée une valeur pour chacun des paramètres de mesure α*ᵤ*, ϕ*ᵥ* et PO au cours de l'étape 2. L'étape 2 est alors suivie de l'étape 3 au cours de laquelle est choisi un niveau de puissance Pᵢ du signal de mesure 110 qui peut-être choisi, par exemple, parmi un ensemble de I niveaux de puissance prédéterminés.

L'étape 3 est alors suivie de l'émission, pendant un intervalle de temps débutant à un instant Td_{Em} et finissant à un autre instant Tf_{Em}, d'un signal de mesure Eₘ (110) relatif au jeu de valeurs de paramètres de mesure choisi tel qu'expliqué dans la partie introductive de la description.

Suite à l'émission du signal de mesure 110, il est déterminé si toutes les I valeurs prédéterminées de niveaux de puissance ont été considérées. Si ce n'est pas le cas, l'étape 3 est à nouveau exécutée afin de choisir un autre niveau de puissance du signal à émettre et un nouveau signal Eₘ₊₁ est émis pendant l'intervalle de temps [Td_{Em+1} ,Tf_{Em+1}]. Dans le cas où toutes les valeurs prédéterminées de niveaux de puissance ont été considérées, l'émission du signal de mesure 110 est suivie de l'étape 2 afin de déterminer un autre jeu de valeurs de paramètres de mesure α*ᵤ*, ϕ*ᵥ*, P0.

L'étape 7 se termine lorsque toutes les I valeurs de niveaux de puissance ont été considérées pour chaque combinaison des valeurs des paramètres de mesure.

Lorsque l'appareil 304 est introduit dans la chambre 102 et installé sur le positionneur 103, il est mis dans un mode particulier, dit de mémorisation de mesures. A l'instant T0, l'appareil 304 est alors incité à exécuter itérativement l'étape 8 et ce jusqu'à ce que l'appareil 304 soit mis dans un autre mode de fonctionnement.

Au cours de chaque itération de l'étape 8, un taux d'erreurs par bit Bp est calculé à partir d'un signal de mesure Eₘ reçu pendant un intervalle de temps débutant à un instant Td_{Em} et se terminant à un autre instant Tf_{Em}. Le taux d'erreurs par bit Bp est alors une valeur, exprimée de préférence en pourcentage, du rapport entre le nombre de bits erronés du signal Eₘ reçu par l'appareil 304 pendant un intervalle de temps [Td_{Bp},Tf_{Bp}] sur le nombre total de bits, connu de l'appareil 304 et émis par le simulateur de réseau 309 pendant un intervalle de temps de durée égale à celle de l'intervalle de temps [Td_{Bp},Tf_{Bp}]. On peut noter que l'exécution successive de l'étape 8 définit un séquencement dans le temps des calculs des taux d'erreurs par bit Bp.

Une fois que l'étape 7 est terminée, l'appareil 304 est mis dans un mode dit de communication des mesures, arrêtant ainsi l'itération de l'étape 8. Le procédé se poursuit alors par l'exécution d'une étape 9 d'obtention par l'unité de contrôle 305 des taux d'erreurs par bit Bp à partir de l'appareil 304 qui sont séquencés (ordonnés dans le temps), accompagnés des intervalles de temps [Td_{Bp},Tf_{Bp}] qui leur correspondent. Dans le cas où l'ordre temporel dans lequel ont été réalisés les calculs de taux d'erreurs par bit Bp, les jeux de valeurs de paramètres de mesure (α*ᵤ*, ϕ*ᵥ*, PO, Pᵢ) et les intervalles de temps [Td_{Em} ,Tf_{Em}] qui leur correspondent et qui ont été utilisés par le simulateur de réseau 309 au cours de l'étape 7 n'ont pas été transférés à l'unité de contrôle 305, ils le sont au cours de l'étape 9, par exemple via la liaison filaire 112 et selon un protocole de réseau commun.

L'étape 9 est alors suivie d'une étape 10, dite de mise en correspondance de taux d'erreurs par bit Bp et de jeux de valeurs de paramètres de mesure (α*ᵤ*, ϕ*ᵥ*, PO, Pᵢ). Suite à chaque mise en correspondance est formée une mesure (Bp, α*ᵤ*, ϕ*ᵥ*, PO, Pᵢ).

Cette étape 9 de mise en correspondance est basée sur les valeurs relatives des instants de début Td_{Em} et de fin Tf_{Em} d'émission des signaux de mesure, déterminées à partir des instants de début Td_{Em} et de fin Tf_{Em} d'émission des signaux de mesure et de l'ordre temporel dans lequel ont été réalisés les calculs de taux d'erreurs par bit Bp, et des instants de début Td_{Bp}, de fin Tf_{Bp} de calcul des taux d'erreurs par bit.

Ceci est rendu possible grâce à la connaissance par l'unité de contrôle 305 des informations temporelles (Td_{Em}, Tf_{Em}, Td_{Bp} et Tf_{Bp}) relatives à l'émission des signaux de mesure et à l'ordre temporel dans lequel les calculs des taux d'erreurs par bit ont été réalisés.

Le procédé se termine par l'exécution de l'étape 6 d'obtention de la sensibilité totale rayonnée au cours de laquelle les mesures (Bp, α*ᵤ*, ϕ*ᵥ*, PO) ainsi obtenues sont intégrées au sens mathématique du terme sur toute l'espace sphérique 108 par une formule connue afin d'obtenir la sensibilité totale rayonnée 3D de l'appareil 304.

Une fois la sensibilité totale rayonnée tridimensionnelle de l'appareil 304 obtenue, le procédé s'arrête.

La Fig. 5 représente un schéma illustrant les différentes étapes du procédé de détermination de la sensibilité totale rayonnée selon la présente invention.

Dans le chronogramme d'en haut, est représentée l'évolution temporelle de l'étape 7 et dans celui du bas celle de l'étape 8.

A l'instant T0, les étapes 1, 2 et 3 (référencées respectivement par les numéros 1, 2 et 3) sont exécutées successivement. A l'instant Td_{E1}, un premier signal de mesure 110 (référencé E₁) est émis et ce jusqu'à l'instant Tf_{E1}. L'étape 3 est alors à nouveau exécutée et un autre signal de mesure E2 est alors émis à partir de l'instant Td_{E2} et ce jusqu'à l'instant Tf_{E2}. Ainsi M signaux de mesure Eₘ sont émis. La valeur entière M est égale au produit du nombre I de valeurs prédéterminées de niveaux de puissance par le nombre de combinaison des valeurs des paramètres de mesure (α*ᵤ*, ϕ*ᵥ*, PO).

Dans la partie basse du schéma de la Fig. 5 sont représentées les exécutions successives de l'étape 8. Au cours de chacune d'entre elles, un premier taux d'erreurs par bit Bp (p=1 à n+1) est calculé à partir d'un signal de mesure Eₘ reçu pendant l'intervalle de temps [Td_{Bp},Tf_{Bp}]. Selon cet exemple, (n+1) taux d'erreurs ordonnés temporellement ont ainsi été calculés. Ce nombre n dépend notamment de la valeur de l'intervalle de temps de chaque exécution de l'étape 8 qui est, selon cet exemple, identique pour toutes ces exécutions de l'étape 8 ([Td_{Bp},Tf_{Bp}]= [Td_{Bp+1},Tf_{Bp+1}]). On peut noter que selon cet exemple Tf_{Bp}= Td_{Bp+1}, c'est-à-dire qu'il est considéré qu'à la suite de la fin de l'exécution d'une itération de l'étape 8 une autre itération de cette étape débute.

Lors de l'étape 10 de mise en correspondance, l'unité de contrôle 305 connaît les valeurs des instants de début Td_{Em} et de fin Tf_{Em} d'émission de chaque signal de mesure Eₘ et les instants de début Td_{Bp} et de fin Tf_{Bp} de calcul de chaque taux d'erreurs par bit Bp du fait de l'émission successive des signaux émis et des calculs successifs de ces taux d'erreurs par bit Bp. Cette unité connaît également les taux d'erreurs par bit Bp qui ont été transférés par l'appareil 304 ainsi que les jeux de paramètres (α*ᵤ*, ϕ*ᵥ*, PO, Pi) relatifs à chaque signal de mesure émis Eₘ.

Selon un mode de réalisation de l'étape 10, chaque taux d'erreurs par bit Bp est associé au jeu de valeurs de paramètres de mesure relatif à l'un des signaux de mesure émis Eₘ. Pour cela, il est déterminé l'intervalle de temps [Td_{Em}, Tf_{Em}] qui inclut l'intervalle de temps [Td_{Bp}, Tf_{Bp}]. Ainsi selon l'exemple de la Fig. 5, les taux d'erreurs par bit B4, B5, sont associés au jeu de paramètres relatif au signal de mesure E₁, les taux B7 et B8 au jeu relatif au signal de mesure E₂ et les taux Bₙ et Bₙ₊₁ au jeu de paramètres relatif au signal de mesure E_{M}.

Dans le cas où un intervalle de temps [Td_{Bp}, Tf_{Bp}] appartient à deux intervalles de temps successifs [Td_{Em}, Tf_{Em}] et [Td_{Em+1}, Tf_{Em+1}], le taux d'erreurs par bit Bp n'est pas considéré. Il en est ainsi des taux B3 et B6 selon l'exemple de la Fig. 5. Enfin, lorsque l'intervalle [Td_{Bp}, Tf_{Bp}] n'est inclus dans aucun intervalle de temps [Td_{Em}, Tf_{Em}], le taux Bp n'est pas considéré. Il en est ainsi des taux B1 et B2 selon l'exemple de la Fig. 5.

Selon un autre mode de réalisation de l'étape 10, chaque jeu de valeurs de paramètres de mesure relatif à l'un des signaux de mesure émis Eₘ est associé à un taux d'erreurs par bit Bp.

Pour cela, il est déterminé le ou les intervalles de temps [Td_{Bp}, Tf_{Bp}] qui est (sont) inclus dans l'intervalle de temps [Td_{Em}, Tf_{Em}]. Lorsque plusieurs intervalles de temps [Td_{Bp}, Tf_{Bp}] sont inclus dans l'intervalle de temps [Td_{Em}, Tf_{Em}], le jeu de paramètres de mesure relatif au signal de mesure Em est associé à l'un de ces taux d'erreurs par bit Bp sélectionné de manière aléatoire par exemple. Selon un autre exemple, le taux d'erreurs par bit choisi est la moyenne de ces taux d'erreurs par bit. Ainsi selon l'exemple de la Fig. 5, le jeu de paramètres de mesure relatif au signal E₁ est associé soit au taux d'erreurs par bit B4 ou B5 ou à la moyenne des B4 et de B5, le jeu de paramètres de mesure relatif au signal E₂ est associé soit au taux d'erreurs par bit B7 ou B8 ou à la moyenne des B7 et de B8, et le jeu de paramètres de mesure relatif au signal E_{M} est associé soit au taux d'erreurs par bit Bₙ ou Bₙ₊₁ ou à la moyenne des Bₙ et de Bₙ₊₁.

Dans le cas où un intervalle de temps [Td_{Bp}, Tf_{Bp}] appartient à deux intervalles de temps successifs [Td_{Em}, Tf_{Em}] et [Td_{Em+1}, Tf_{Em+1}], le taux d'erreurs par bit Bp n'est pas considéré. C'est le cas des taux d'erreurs par bit B3 et B6. On peut noter aussi que les taux de bits B1 et B2, selon cet exemple, ne sont pas considérés car leurs intervalles de temps respectifs ne sont pas inclus dans un intervalle de temps [Td_{Em}, Tf_{Em}].

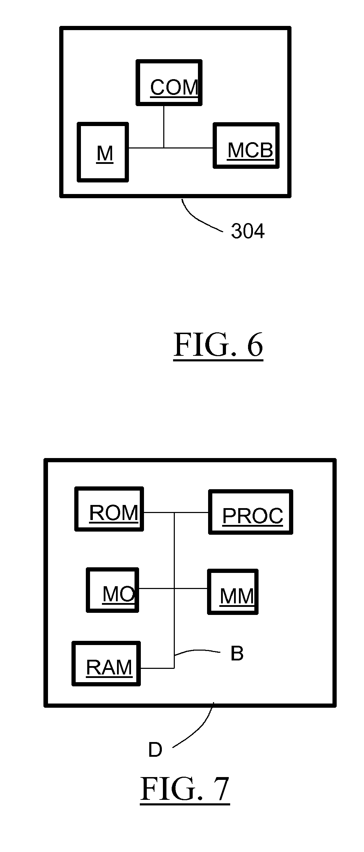

La Fig. 6 représente un schéma synoptique de l'appareil mobile 304 de télécommunication par signaux radiofréquences.

L'appareil 304 est un appareil de téléphonie muni de moyens classiques de réception de signaux radiofréquences. Il comporte également des moyens MCB de calcul de taux d'erreurs par bit et une mémoire M qui peut être amovible et qui est destinée à mémoriser les taux d'erreurs par bit Bp selon l'ordre dans lequel ils sont calculés. Cette mémoire M peut être soit interne, soit amovible. De plus, l'appareil 304 comporte des moyens COM pour transférer des données (taux d'erreurs par bit, ordre dans lequel ils ont été calculés, valeurs des instants de début et de fin, valeurs des paramètres de mesure) vers un autre dispositif tel que l'unité de contrôle 304. Ce transfert s'effectue soit au travers d'une liaison filaire ou autre selon un protocole connu, soit à partir de la lecture de la mémoire amovible M.

La Fig. 7 représente un schéma synoptique d'un dispositif D de la chaîne de mesure 101. Le dispositif D est, de manière non limitative, un ordinateur de bureau ou un terminal mobile. Selon l'exemple de la Fig. 3, le dispositif D est intégré à l'unité de contrôle 305. Le dispositif D comporte un bus de communication B auquel sont reliés un processeur PROC, une mémoire non volatile ROM et une mémoire vive RAM.

La mémoire non volatile ROM mémorise les programmes et les données numériques permettant, notamment, la mise en oeuvre des étapes 9 et 10 du procédé conformément à celles décrites précédemment. De manière plus générale, la mémoire ROM est lisible par le processeur PROC, intégrée ou non au dispositif D, et peut être amovible. Selon un mode de réalisation du dispositif D, ces programmes et/ou ces données numériques sont récupéré(e)s au travers d'une liaison filaire ou autre et/ou à partir de la lecture de mémoire amovible (non représentée).

Le dispositif D comporte également des moyens MO d'obtention des taux d'erreurs par bits mémorisés sur la mémoire M de l'appareil 304, de l'ordre dans lequel ces taux ont été calculés, des jeux de valeurs de paramètres de mesure mémorisés par le simulateur de réseau 309 ainsi que des valeurs des instants de début et de fin relatifs à chaque taux d'erreurs par bit calculé et de chaque signal émis. Les moyens MO, de préférence logiciels, permettent au simulateur de réseau 309 de communiquer avec ledit dispositif D selon un protocole connu et ce soit selon une liaison qui peut être filaire soit par lecture de la mémoire M. Le dispositif D comporte également des moyens MM de mise en correspondance destinés à mettre en correspondance des taux de bits Bp ainsi obtenus et des jeux de valeurs de paramètres de mesure (α*ᵤ*, ϕ*ᵥ*, PO, Pᵢ) relatifs à un signal de mesure 110 émis afin d'obtenir des mesures (Bp, α*ᵤ*, ϕ*ᵥ*, PO, P₀). Cette correspondance est basée sur les valeurs relatives des instants de début et de fin d'émission des signaux de mesure et des instants de début, de fin et de séquencement de calcul des taux d'erreurs par bit.

## Revendications

1. Procédé de détermination de la sensibilité totale rayonnée d'un appareil mobile de télécommunication par signaux radiofréquences destiné à être utilisé dans un réseau de télécommunication, ledit procédé comportant une étape (4) de calcul de taux d'erreurs par bit au cours de laquelle des taux d'erreurs par bit (Bp) sont calculés à partir de signaux de mesure (Eₘ) reçus par ledit appareil, chacun desdits signaux de mesure (Eₘ) reçus étant relatif à un jeu de valeurs de paramètres de mesure (α*ᵤ*, ϕ*ᵥ*, PO, Pᵢ), et une étape (6) d'obtention de la sensibilité totale rayonnée au cours de laquelle une sensibilité totale rayonnée tridimensionnelle de l'appareil est obtenue par l'intégration volumique de mesures définies chacune par l'association d'un taux d'erreurs par bit (Bp) avec le jeu de valeurs de paramètres de mesure (α*ᵤ*, ϕ*ᵥ*, PO, Pᵢ) relatif à l'un desdits signaux émis (Eₘ), la mise en oeuvre dudit procédé ne pouvant utiliser une liaison montante, le procédé est **caractérisé en ce qu'**au cours de ladite étape (4) de calcul de taux d'erreurs par bit, les taux d'erreurs par bit calculés (Bp) sont mémorisés par ledit appareil de télécommunication et **en ce que** ladite étape (6) d'obtention de la sensibilité totale rayonnée est précédée d'une étape (10) de mise en correspondance entre taux de bits ainsi mémorisés (Bp) et jeux de valeurs de paramètres de mesure (α*ᵤ*, ϕ*ᵥ*, PO, Pᵢ), correspondance qui est basée sur les valeurs relatives des instants de début (Td_{Em}) et de fin (Tf_{Em}) d'émission des signaux de mesure et sur les valeurs des instants de début (Td_{Bp}), de fin (Tf_{Bp}) et de séquencement de calcul des taux d'erreurs par bit.

2. Procédé selon la revendication 1, **caractérisé en ce qu'**au cours de ladite étape (10) de mise en correspondance, chaque taux d'erreurs par bit ainsi mémorisé (Bp) est associé au jeu de valeurs de paramètres de mesure (α*ᵤ*, ϕ*ᵥ*, PO, Pᵢ) relatif à l'un desdits signaux de mesure émis (Eₘ).

3. Procédé selon la revendication 1, **caractérisé en ce qu'**au cours de ladite étape (10) de mise en correspondance, chaque jeu de valeurs de paramètres de mesure (α*ᵤ*, ϕ*ᵥ*, PO, Pᵢ) relatif à l'un desdits signaux de mesure émis (Eₘ) est associé à un taux d'erreurs par bit (Bp).

4. Appareil de télécommunication par signaux radiofréquences **caractérisé en ce qu'**il comporte des moyens (MCB) pour calculer un taux d'erreurs par bit selon le procédé de détermination de sa sensibilité totale rayonnée conforme à l'une des revendications 1 à 3, des moyens pour mémoriser lesdits taux d'erreurs par bit ainsi calculés et des moyens (COM) pour transférer entre autre lesdits taux d'erreurs par bit vers un autre dispositif.

5. Dispositif d'une chaîne de mesure destinée à mettre en oeuvre un procédé de détermination de la sensibilité totale rayonnée d'un appareil de télécommunication par signaux radiofréquences conforme à l'une des revendications 1 à 3, ledit dispositif comporte des moyens (MO) pour obtenir des taux d'erreurs par bit à partir dudit appareil suite à la mémorisation par ledit appareil de taux d'erreurs par bit calculés suite à des signaux de mesure reçus, et des moyens (MM) pour mettre en correspondance chaque taux d'erreurs par bit ainsi obtenu avec un jeu de paramètres de mesure relatif à l'un des signaux de mesure reçus par ledit appareil.

6. Programme d'ordinateur stocké sur un support d'informations qui est **caractérisé en ce qu'**il comporte, lorsqu'il est chargé et exécuté par un dispositif d'une chaîne de mesure destinée à déterminer la sensibilité totale rayonnée d'un appareil de télécommunication par émission de signaux de mesure, des instructions permettant de mettre en oeuvre une étape d'obtention de taux d'erreurs par bit calculés à partir de signaux de mesure reçus et mémorisés par ledit appareil de télécommunication, et une étape de mise en correspondance entre lesdits taux d'erreurs par bit ainsi obtenus et les jeux de valeurs de paramètres de mesure relatifs auxdits signaux de mesure émis.
